# EUROPEAN PATENT APPLICATION

(11) **EP 4 607 775 A1**
(43) Date of publication of application: **27.08.2025**
(21) Application number: 23879692.4
(22) Date of filing: 12.10.2023
(51) Int. Cl.: H02K 15/02

(54) **LAMINATED IRON CORE INSPECTION METHOD AND DEVICE, AND REPAIR METHOD AND DEVICE**

(30) Priority: 19.10.2022 JP 2022167653
(71) Applicant: NHK Spring Co., Ltd., Yokohama-shi, Kanagawa 236-0004 (JP)
(72) Inventor: ANDO, Shuji, Yokohama-shi Kanagawa 236-0004 (JP); JIN, Yuichiro, Yokohama-shi Kanagawa 236-0004 (JP)
(74) Representative: Oppermann, Frank
(86) International application number: PCT/JP2023/036959
(87) International publication number: WO 2024/085049

(57) **Abstract**

Provided is an inspection method for a laminated iron core, capable of performing inspection for protruding amounts of welded portions with high accuracy and high speed. The inspection method for the laminated iron core 1 in which a plurality of annular iron core pieces 3 are laminated in an axial direction and a plurality of welded portions 5 are provided in a circumferential direction, the welded portions reaching an end face 1a configured by an iron core piece 3 at an end in the axial direction, rotates the laminated iron core 1 in the circumferential direction, and serially measures, from the axial direction, protruding amounts of the plurality of the welded portions 5 with respect to the end face 1a in the axial direction according to the rotating of the laminated iron core 1.

## Description

### FIELD OF THE INVENTION

The present invention relates to an inspection method, an inspection device, a repair method, and a repair device for a laminated iron core used for an electric motor or the like.

### BACKGROUND OF THE INVENTION

As a conventional laminated iron core, there is one in which a plurality of annular iron core pieces are laminated in an axial direction and are joined together with welded portions extending in the axial direction at a plurality of circumferential positions (for example, patent document 1).

In the laminated iron core, the welded portion may protrude from an end face of the laminated iron core in the axial direction. The protrusion may cause deterioration in assembling accuracy, generation of scratches or the like when assembling the laminated iron core to end plates or a rotor shaft and may be required to be smaller than a given standard.

In this case, in manufacturing process of the laminated iron core, there is a need to inspect protruding amounts of the welded portions from the end face and eliminate or repair the laminated iron core with the protruding amounts of the welded portions larger than the standard.

The inspection of the protruding amount of the welded portion, however, needs to be performed to all of a plurality of welded portions in each laminated iron core and involves increase in inspection number. The inspection of the protruding amounts, therefore, requires speed as well as accuracy and is hard to be realized.

### CITATION LIST

### PATENT LITERATURE

PATENT LITERATURE 1: JP6469355B

### SUMMARY OF THE INVENTION

### PROBLEMS TO BE SOLVED BY THE INVENTION

A problem to be solved is that performing inspection of protruding amounts for welded portions is not realized with high accuracy and high speed.

### MEANS FOR SOLVING THE PROBLEM

The present invention provides an inspection method for a laminated iron core in which a plurality of annular iron core pieces are laminated in an axial direction and a plurality of welded portions are provided in a circumferential direction, the welded portions reaching an end face configured by an iron core piece at an end in the axial direction. The inspection method rotates the laminated iron core in the circumferential direction, and serially measures, from the axial direction, protruding amounts of the plurality of the welded portions with respect to the end face in the axial direction according to the rotating of the laminated iron core.

Further, the present invention provides a repair method for a laminated iron core piece using the aforementioned inspection method for the laminated iron core. The repair method irradiates, from the axial direction, a protruding portion of the welded portion protruding from the end face in the axial direction with a laser if the protruding amount exceeds a standard, to make the protruding amount within the standard.

Moreover, the present invention provides an inspection device for a laminated iron core in which a plurality of annular iron core pieces are laminated in an axial direction and a plurality of welded portions are provided in a circumferential direction, the welded portions reaching an end face configured by an iron core piece at an end in the axial direction. The inspection device is provided with a rotating part configured to support and rotate the laminated iron core in the circumferential direction, and a measuring part arranged to face the end face of the rotating laminated iron core in the axial direction and configured to serially measure, from the axial direction, protruding amounts of the plurality of the welded portions with respect to the facing end face in the axial direction according to the rotating of the laminated iron core.

Furthermore, the present invention provides a repair device for a laminated iron core using the aforementioned inspection device for the laminated iron core. The repair device is provided with a laser irradiator that irradiates, from the axial direction, a protruding portion of the welded portion protruding from the end face in the axial direction with a laser if the protruding amount exceeds a standard to make the protruding amount within the standard.

### EFFECT OF THE INVENTION

The inspection method and the inspection device for a laminated iron core of the present invention perform inspection of projection amounts for welded portions with high accuracy and high speed.

The repair method and the repair device for a laminated iron core of the present invention accurately repair the laminated iron core with high speed through the inspection of the projection amounts for the welded portions performed with high accuracy and high speed.

### BRIEF DESCRIPTION OF THE DRAWINGS

[FIG. 1] FIG. 1 is a perspective view illustrating a laminated iron core being an inspection object according to an embodiment 1 of the present invention.
[FIG. 2] FIG. 2 is a perspective view illustrating part of FIG. 1 with enlargement.
[FIG. 3] FIG. 3 is a plan view illustrating a welded portion and its periphery of FIG. 2.
[FIG. 4] FIG. 4 is a side view illustrating the welded portion and its periphery of FIG. 2.
[FIG. 5] FIG. 5 is a block diagram illustrating an inspection device according to the embodiment 1.
[FIG. 6] FIG. 6 is a side view illustrating a schematic configuration of the inspection device of FIG. 5 with a partial cross-section.
[FIG. 7] FIG. 7 is a side view illustrating a rotating part and a measuring part with a partial cross-section of FIG. 6 when measuring the welded portions.
[FIG. 8] FIG. 8 is a plan view illustrating the rotating part and the measuring part of the inspection device of FIG. 6.
[FIG. 9] FIG. 9 is a process chart illustrating an inspection method of the laminated iron core according to the embodiment 1.
[FIG. 10] FIG. 10 is a side view illustrating a schematic configuration of a repair device with a partial cross-section according to an embodiment 2 of the present invention.
[FIG. 11] FIG. 11 is a side view illustrating a rotating part, a measuring part, and a laser irradiator of FIG. 10 with a partial cross-section when measuring and repairing welded portions.
[FIG. 12] FIGs. 12(A)-(C) are process charts illustrating a repair method of a laminated iron core in which FIG. 12(A) indicates general process, FIG. 12(B) indicates a detail of a first repair step of FIG. 12(A), and FIG. 12(C) indicates a detail of a second repair step of FIG. 12(A).
[FIG. 13] FIG. 13 is a block diagram illustrating a repair device according to an embodiment 3 of the present invention.
[FIG. 14] FIG. 14 is a side view illustrating a schematic configuration of the repair device of FIG. 13 with a partial cross-section.

### EMBODIMENT FOR CARRYING OUT THE INVENTION

The object capable of performing inspection of projection amounts for welded portions with high accuracy and high speed is achieved by axially measuring protruding amounts of welded portions relative to an axial end face while rotating a laminated iron core.

An inspection method for a laminated iron core is an inspection method for a laminated iron core 1 in which a plurality of annular iron core pieces 3 are laminated in an axial direction as illustrated in drawings. The laminated iron core 1 has a plurality of welded portions 5 in a circumferential direction, the welded portions reaching an end face 1a configured by an iron core piece 3 located at an end in the axial direction.

The inspection method rotates the laminated iron core 1 in the circumferential direction, and serially measuring, from the axial direction, protruding amounts of the plurality of the welded portions 5 with respect to the end face 1a in the axial direction according to the rotating of the laminated iron core 1.

The inspection method may three-dimensionally measure dimensions of the welded portion 5 in the circumferential direction and a diametral direction of the laminated iron core 1 together with the protruding amount of the welded portion 5.

The measuring of the protruding amounts may be performed relative to one end face 1a of the laminated iron core 1 in the axial direction and then be performed relative to the other end face 1a in the axial direction subsequent to inverting of the laminated iron core 1.

Further, a dimension of the laminated iron core 1 in the axial direction may be measured before measuring the protruding amounts, and a position of the laminated iron core 1 in the axial direction may be relatively adjusted according to the measured dimension so that an interspace between a measuring source 13 to perform the measuring of the protruding amounts and the end face 1a is constant in the axial direction.

A repair method for the laminated iron core 1 using the inspection method irradiates, from the axial direction, a protruding portion 5a of the welded portion 5 protruding from the end face 1a in the axial direction with a laser if the protruding amount exceeds a standard, to make the protruding amount within the standard.

The irradiating of the laser is preferably performed in parallel with the measuring of the protruding amounts on a same end face 1a as the end face in which the welded portions 5 of the laminated iron core 1 are being measured.

An inspection device 7 for the laminated iron core 1 is provided with a rotating part 11 and a measuring part 13. The rotating part 11 is configured to support and rotate the laminated iron core 1 in the circumferential direction. The measuring part 13 is arranged to face the end face 1a of the rotating laminated iron core 1 in the axial direction and is configured to serially measure, from the axial direction, protruding amounts of the plurality of the welded portions 5 with respect to the facing end face 1a in the axial direction according to the rotating of the laminated iron core 1.

The measuring part 13 may three-dimensionally measure dimensions of the welded portion 5 in the circumferential direction and a diametral direction of the laminated iron core 1 together with the protruding amount.

The inspection device 7 may be provided with a holding part 15 configured to hold and invert the laminated iron core 1. In this case, measuring of the protruding amounts is performed by the measuring part 13 relative to one end face 1a in the axial direction, and thereafter the laminated iron core 1 is inverted by the holding part 15 and measuring of the protruding amounts is performed by the measuring part 13 relative to the other end face 1a in the axial direction.

Further, the inspection device 7 may be provided with a dimension-measuring part 9 configured to measure a dimension of the laminated iron core 1 in the axial direction. In this case, the rotating part 11 or the measuring part 13 is moved in the axial direction to relatively adjust a position of the laminated iron core 1 in the axial direction according to the measured dimension so that an interspace between the measuring part 13 and the end face 1a is constant in the axial direction.

A repair device 19 having the above inspection device 7 is provided with a laser irradiator 21. The laser irradiator 21 irradiates, from the axial direction, a protruding portion 5a of the welded portion 5 protruding from the end face 1a in the axial direction with a laser if the protruding amount of the welded portion 5 exceeds a standard, to make the protruding amount within the standard.

The laser irradiator 21 may be arranged to face the end face 1a of the laminated iron core 1 in the axial direction to perform the irradiating of the laser in parallel with the measuring of the protruding amounts on a same end face 1a as the end face on which the welded portions 5 of the laminated iron core 1 are being measured.

### Embodiment 1

### [Laminated iron core]

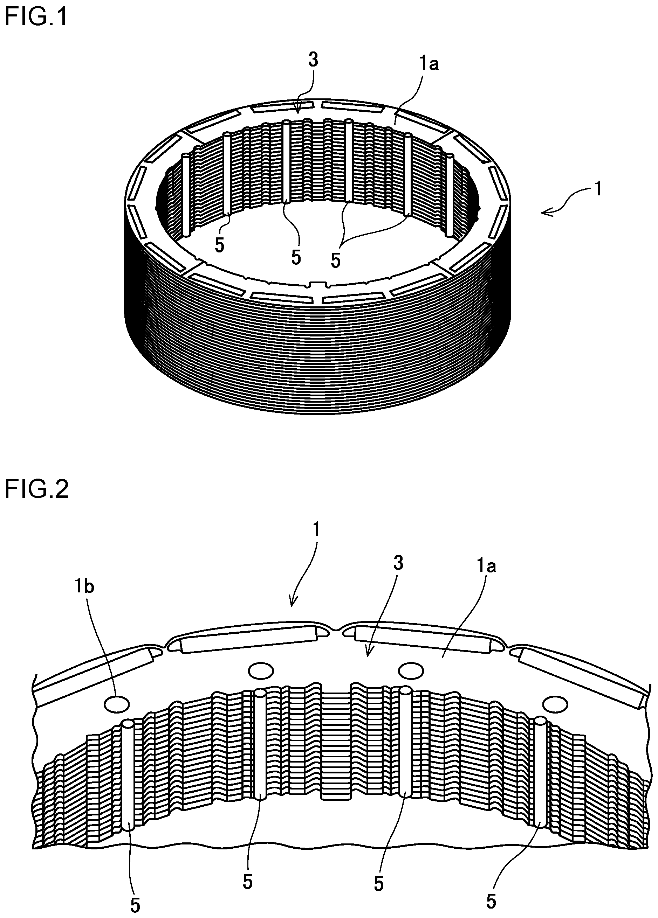

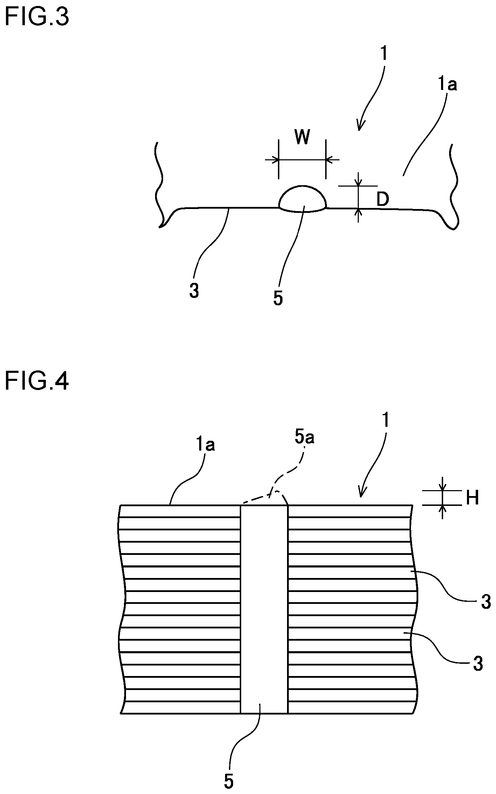

FIG. 1 is a perspective view illustrating a laminated iron core being an inspection object of the embodiment 1 of the present invention. FIG. 2 is a perspective view illustrating part of FIG. 1 with enlargement. FIG. 3 is a plan view illustrating a welded portion and its periphery of FIG. 2. FIG. 4 is a side view illustrating the welded portion and its periphery of FIG. 2.

A laminated iron core 1 being an inspection object is a rotor core used for a rotor side of an electric motor or a generator. The laminated iron core 1, however, may be a stator core for a stator side.

In the laminated iron core 1, a plurality of annular iron core pieces 3 are laminated in an axial direction and are unified with a plurality of welded portions 5. The plurality of the welded portions 5 are provided on the laminated iron core 1 at intervals in a circumferential direction. The annular iron core piece 3 may be for any one of a non-separated core made of a single annular member or a separated core in which arc-shaped members for an iron core are annularly arranged. In the present embodiment, the iron core piece 3 is for the separated core.

In addition, the axial direction is a direction along an axial center of the laminated iron core 1. Further, a circumferential direction is hereinafter an extending direction around the axial center of the laminated iron core 1, and a diametral direction is a direction along a diameter of the laminated iron core 1.

The plurality of the welded portions 5 are extended on an inner periphery of the laminated iron core 1 in the axial direction, respectively, and reach end faces 1a configured by the iron core pieces 3 at ends of the laminated iron core 1 in the axial direction. It should be noted that the welded portion 5 may be an object for inspection as long as it reaches any one of the end faces 1a of the laminated iron core 1. Accordingly, the welded portion 5 may be formed on only any one of end portions in the axial direction.

The welded portion 5 has a melting width W and a melding depth D in a planar shape seen from the axial direction. The melting width W is a dimension of the welded portion 5 in the circumferential direction and the melding depth D is a dimension of the welded portion 5 relative to an edge of an inner periphery of the iron core piece 3 in the diametral direction. In addition, in a case that the welded portion 5 is formed on an outer periphery of the laminated iron core 1, the melting depth D is a dimension of the welded portion 5 relative to an edge of the outer periphery in the diametral direction. Further, the welded portion 5 may have a protruding portion 5a protruding from the end face 1a in the axial direction. A dimension (protruding height) of the protruding portion 5a relative to the end face 1a in the axial direction is deemed as a protruding amount H.

An inspection method of the present embodiment uses an inspection device 7 to inspect the melting width W, the melding depth D, and the protruding amount H of the welded portion 5. The inspection of the protruding amount H is performed for assembling accuracy and the like. The inspection of the melting width W and the melting depth D is performed for need to sometimes decide whether the melting width W and the melting depth D are within predetermined ranges or not on determination of suitability of the welded portion 5. The melting width W and the melting depth D may be, therefore, omitted to be inspected if not required.

### [Inspection device]

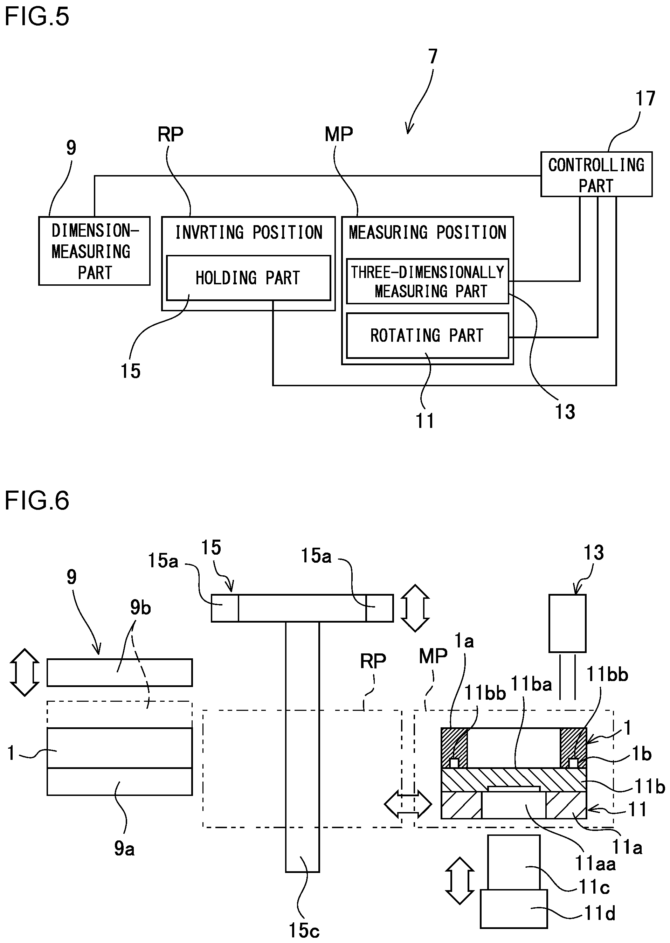

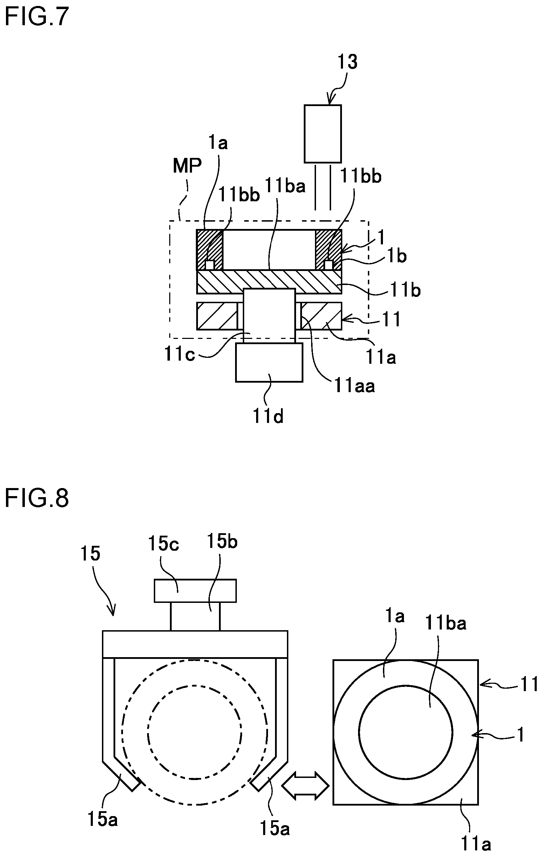

FIG. 5 is a block diagram illustrating an inspection device according to the embodiment 1. FIG. 6 is a side view illustrating a schematic configuration of the inspection device of FIG. 5 with a partial cross-section. FIG. 7 is a side view illustrating a rotating part and a measuring part with a partial cross-section of FIG. 6 when measuring the welded portions. FIG. 8 is a plan view illustrating the rotating part and the measuring part of the inspection device of FIG. 6.

The inspection device 7 for the laminated iron core 1 is incorporated in a manufacturing line for the laminated iron core 1, for example. The inspection device 7 is provided with a dimension-measuring part 9, a rotating part 11, a three-dimensionally measuring part 13 as a measuring part, a holding part 15, and a controlling part 17.

The dimension-measuring part 9 is a dimension-measuring device to measure a dimension of the laminated iron core 1 in the axial direction. The dimension-measuring part 9 of the present embodiment has a pressure plate 9b movably arranged above a loading plate 9a to face the loading plate, the loading plate to load the laminated iron core 1 thereon. Then, the dimension-measuring part 9 pressurizes the laminated iron core 1 between the loading plate 9a and the pressure plate 9b in the axial direction, and obtains the dimension of the laminated iron core 1 in the axial direction at this time.

It should be noted that the dimension-measuring part 9 may be one to obtain the dimension of the laminated iron core 1 in the axial direction without pressurizing. The dimension-measuring part 9 may be a non-contact measuring device using a laser or the like. Further, the dimension-measuring part 9 may be omitted.

The rotating part 11 is to support and rotate the laminated iron core 1 in the circumferential direction. The rotating part 11 of the present embodiment is provided with a base 11a, a rotary plate 11b, and a rotary shaft 11c.

The base 11a is a member to be moved between a measuring position MP and an inverting position RP. In addition, the measuring position MP is a position for conducting measurement for the welded portions 5 including measurement of the protruding amounts H of the welded portions 5 of the laminated iron core 1 using the three-dimensionally measuring part 13 explained later, and the inverting position RP is a position for inverting the laminated iron core 1 using the holding part 15 explained later.

The measuring position MP and the inverting position RP are provided one of each according to the present embodiment, and the base 11a is reciprocated between the measuring position MP and the inverting position RP. The reciprocating may be performed by an appropriate drive device such as a linear actuator, a linear guide, or an electric motor.

The base 11a is provided with a through-hole 11aa. The through-hole 11aa penetrates the base 11a in an up-and-down direction that is an intersecting direction relative to a movement direction of the base 11a. Over the through-hole 11a, the rotary plate 11b is arranged.

In addition, although the up-and-down direction is an up-and-down direction of the inspection device 7 and is a vertical direction in the present embodiment, the up-and-down direction is not necessarily the vertical direction according to installation condition of the inspection device 7. The up-and-down direction corresponds to the axial direction of the laminated iron core 1 to be rotated by the rotating part 11 in the present embodiment.

The rotary plate 11b is a plate member arranged on the base 11a. The rotary plate 11b is not connected to the base 11a in the up-and-down direction and is movable upward away from the base plate 11a.

On the rotary plate 11b, a loading face 11ba is provided to load the laminated iron core 1 thereon, and the loading face 11ba is provided with pins 11bb for positioning. The pins 11bb are axially inserted into holes 1b formed on the laminated iron core 1 for positioning to position the laminated iron core 1 on the loading face 11ba of the rotary plate 11b.

The rotary shaft 11c is arranged at the measuring position MP so as to be retractable along the up-and-down direction below the base 11a. The rotary shaft 11c may be a simple rod shape to be driven in the up-and-down direction, an extendable cylinder device or the like. The rotary shaft 11c advances upward if the base 11a is in the measuring position MP to engage with the rotary plate 11b through the through-hole 11aa of the base 11a and support the rotary plate 11b.

The rotary shaft 11c may be adjusted in a supporting position for the rotary plate 11b in the up-and-down direction according to an upward advancing amount. The advancing amount is set according to the dimension of the laminated iron core 1 in the axial direction. As this result, the rotating part 11 is operated in the axial direction to relatively adjust a position of the laminated iron core 1 in the axial direction so that an interspace between the three-dimensionally measuring part 13 and the end face 1a of the laminated iron core 1 on the rotating part 11 is constant in the axial direction.

It should be noted that, the adjustment of the position of the laminated iron core 1 in the axial direction is sufficient to be relatively performed between the three-dimensionally measuring part 13 and the laminated iron core 1, and therefore may be performed by moving the three-dimensionally measuring part 13 in the axial direction. Namely, in the adjustment of the position of the laminated iron core 1 in the axial direction, it should move any one of the laminated iron core 1 or the three-dimensionally measuring part 13 as a measuring source relative to the other thereof the axial direction.

Further, the rotary shaft 11c may be configured to be integrally connected to the rotary plate 11b. In this case, the rotary plate 11b and the rotary shaft 11c are moved together with the base at the time of moving of the base 11a.

The rotary shaft 11c is connected to a drive source 11d such as a stepping motor, and is intermittently rotated around an axis according to driving of the drive source 11d. The intermittently rotating of the present embodiment means it repeats stopping after rotating with a predetermined angle. In addition, the rotating around the axis may be continuously performed.

According to the rotating around the axis, the rotary shaft 11c integrally rotates the rotary plate 11b connected thereto, to rotate the laminated iron core 1 through the rotary shaft 11b.

The three-dimensionally measuring part 13 is a three-dimensionally measuring device arranged above the rotating part 11 in a case that the base 11a is in the measuring position MP. With this, the three-dimensionally measuring part 13 faces the end face 1a of the laminated iron core 1 rotating at the measuring position MP in the axial direction.

The three-dimensionally measuring part 13 sequentially measures, from the axial direction, the protruding amounts H of the plurality of the welded portions 5 with respect to the facing end face 1a in the axial direction according to the rotating of the laminated iron core 1. According to the present embodiment, the melting width W and the melting depth D are three-dimensionally measured as well as the protruding amount H of the welded portion 5.

The measuring from the axial direction means measuring from a position apart in the axial direction and does not mean measuring along the axial direction. The three-dimensionally measuring may be performed by an appropriate method such as an optical interference method or a confocal method to read three-dimensional coordinates using a laser or light. Further, although the measuring is preferably performed in a noncontact manner, it may be performed in a contact manner. It should be noted that the measuring may not be the three-dimensionally measuring as long as the protruding amounts H of the welded portions 5 are measured. In this case, an appropriate height-measuring device may be used.

The sequentially measuring means that the three-dimensionally measuring part 13 measures the welded portions 5 one facing the three-dimensionally measuring part in the up-and-down direction after another according to the continuously rotating or the intermittently rotating of the laminated iron core 1. According to the present embodiment, the three-dimensionally measuring part 13 faces and measures the welded portion 5 when the rotating is stopped according to the intermittently rotating of the laminated iron core 1. The three-dimensionally measuring part 13 may be rotated relative to the laminated iron core 1 in the circumferential direction.

The holding part 15 holds and inverts the laminated iron core 1. According to the present embodiment, the holding part 15 is composed of a pair of arms 15a. The arms 15a are supported to be inverted by an inverting-drive mechanism 15b such as a rack-and-pinion and are movably supported by a vertical drive mechanism 15 such as a linear guide in the up-and-down direction.

The holding part 15 descends to hold the laminated iron core 1 located at the inverting position PR and ascends to be inverted. In this inverting state, the holding part 15 descends to release the laminated iron core 1 on the rotating part 11.

It should be noted that the holding part 15 may be omitted. In this case, the measuring of the protruding amounts H may be performed on both sides in the axial direction or only one side in the axial direction without inverting the laminated iron core 1 or may be performed while manually inverting the laminated iron core.

The controlling part 17 is a computer to control each part of the aforementioned inspection device 7, the computer having a control unit such as a processor and a storage device such as a memory. The controlling part 17 controls each part of the inspection device 7, thereby realizing the inspection method.

### [Inspection method for laminated iron core]

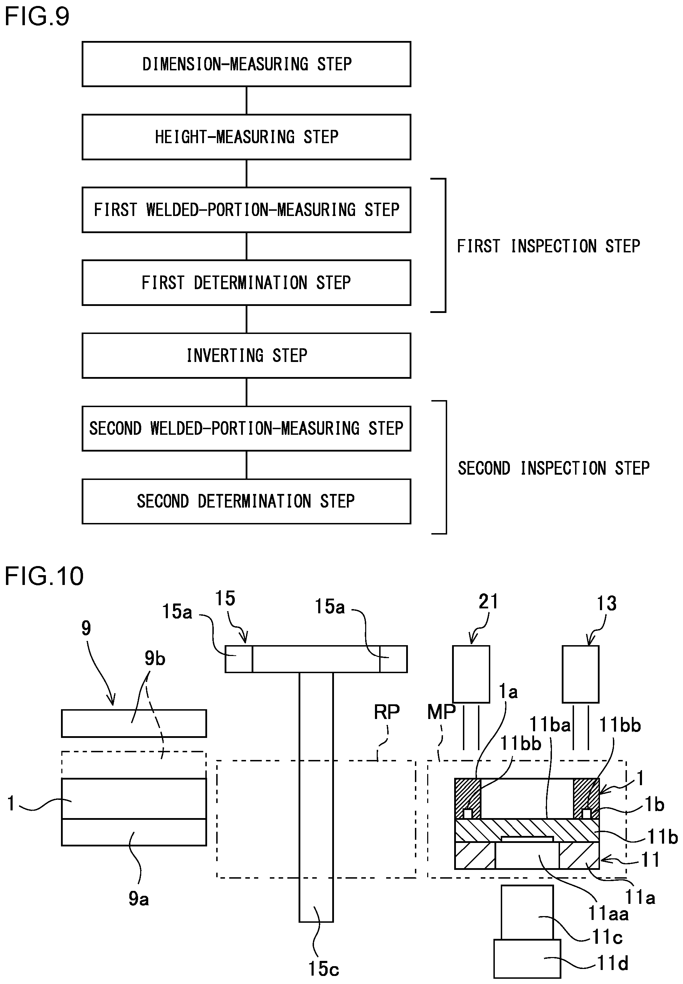

FIG. 9 is a process chart illustrating the inspection method of the laminated iron core 1 of the embodiment 1.

The inspection method for the laminated iron core 1 of the present embodiment preforms a dimension-measuring step, a height-adjusting step, a first welded-portion-measuring step, a first determination step, an inverting step, a second welded-portion-measuring step, and a second determination step, to inspect the plurality of the welded portions 5 of the laminated iron core 1. In addition, in the laminated iron core 1, the annular iron core pieces 3 are laminated and unified using the plurality of the welded portions 5 in advance.

In the dimension-measuring step, the dimension-measuring part 9 receives the laminated iron core 1 conveyed on the manufacturing line as illustrated in FIG. 6. The receiving may be performed by a pick-and-place unit or the like not illustrated. The dimension-measuring part 9 pressurizes the received laminated iron core 1 between the loading plate 9a and the pressure plate 9b in the axial direction and measures the dimension of the laminated iron core. Completing the measuring of the dimension, the laminated iron core 1 is conveyed on the manufacturing line to perform the subsequent height-adjusting step.

In the height-adjusting step, the rotating part 11 receives the conveyed laminated iron core 1 on the rotary plate 11b. The receiving may be performed by using a pick-and-place unit not illustrated, the holding part 15 or the like.

Receiving the laminated iron core 1 on the rotary plate 11b, the pins 11bb on the rotary plate 11b are inserted into the holes 1b of the laminated iron core 1, and the laminated iron core 1 is positioned on the rotary plate 11b. In this state, the base 11a of the rotating part 11 is moved to the measuring position MP.

At the measuring position MP, the rotary shaft 11c advances upward to engage with the rotary plate 11b as illustrated in FIG. 7. At this time, the advancing amount of the rotary shaft 11c is adjusted according to the dimension, measured in the dimension-measuring step, of the laminated iron core 1 in the axial direction.

With this, the rotating part 11 is operated in the axial direction to relatively adjust the position (height) of the laminated iron core 1 in the up-and-down direction (the axial direction) with respect to the three-dimensionally measuring part 13 so that the interspace between the three-dimensionally measuring part 13 and the end face 1a of the laminated iron core 1 is constant in the axial direction.

The first welded-portion-measuring step forms a first inspection step together with the first determination step. In this first welded-portion-measuring step, the rotary plate 11b is rotated by the rotary shaft 11c, first. With this, the laminated iron core 1 is rotated in the circumferential direction. The rotating is intermittent to stop every after being performed at the predetermined angle, and the welded portion 5 of the laminated iron core 1 faces the three-dimensionally measuring part 13 in the up-and-down direction at every stop.

Then, the three-dimensionally measuring part 13 measures, from the axial direction, the protruding amount H of the facing welded portion 5 relative to the end face 1a in the axial direction. According to the present embodiment, the protruding amount H is measured together with the melting width H and the melting depth D using the three-dimensionally measuring.

In this way, the present embodiment measures the welded portion 5 from the axial direction, thereby accurately measuring the protruding amount H of the welded portion 5 inclusive of a position of the protruding portion 5a in the welded portion 5. Additionally, the present embodiment accurately measures the melting width W and the melting depth D as well as the protruding amount H. Further, the present embodiment performs the measuring from the axial direction while rotating the laminated iron core 1, so that it quickly performs the measuring for the plurality of the welded portions 5.

Furthermore, the measuring for each welded portion 5 is performed while keeping the distance between the three-dimensionally measuring part 13 and the end face 1a constant, so that variation in the measuring condition is suppressed for each welded portion 5 to improve and stabilize measuring accuracy. Further, the rotary shaft 11c is used to easily keep the distance between the three-dimensionally measuring part 13 and the end face 1a constant.

In the first determination step, the controlling part 17 determines suitability of the laminated iron core 1 based on the protruding amounts H, the melting widths W, and the melting depths D obtained in the first welded-portion-measuring step. Namely, it determines whether the protruding amount H, the melting width W, and the melting depth D of each welded portion 5 meet the standards or not. If all the protruding amount, the melting width and the melting depth meet the standards, the laminated iron core 1 is determined as a quality product and is advanced to the subsequent inverting step.

On the other hand, if there is one of the protruding amount H, the melting width W and the melting depth D of each welded portion 5 that does not meet the standard, the laminated iron core 1 is determined as a defective product. The laminated iron core 1 determined as the defective product is separated from the quality products by discharged from a defective product outlet or the like.

In the inverting step, the laminated iron core 1 is inverted to be made upside down after the first welded-portion-measuring step is completed, i.e. after the measuring of the protruding amounts H is performed with respect to one end face 1a of the laminated iron core 1 in the axial direction.

In this inverting step, the base 11a of the rotating part 11 is moved to the inverting position after the first welded-portion-measuring step, first. As the base 11a is moved to the inverting position RP, the holding part 15 descends so that the laminated iron core 1 is positioned between the arms 15a of the holding part 15. In this state, the holding part 15 holds the laminated iron core 1 using the arms 15a.

The holding part 15 holding the laminated iron core 1 ascends to a predetermined upward position and performs inverting operation at the upward position. This vertically inverts the laminated iron core 1. In this state, the holding part 15 descends to load the inverted laminated iron core 1 on the rotary plate 11b. Thereafter, the holding part 15 releases the laminated iron core 1 and ascends to the initial position, and the base 11a of the rotating part 11 is moved to the measuring position MP.

The second welded-portion-measuring step forms a second inspection step together with the second determination step. The second welded-portion-measuring step performs measuring, from the axial direction, of the protruding amounts H in the axial direction, the melting widths W and the melting depths D of the welded portions 5 relative to the other end face 1a while rotating the laminated iron core 1 in the circumferential direction like the first welded-portion-measuring step.

In the second determination step, the controlling part 17 determines suitability of the laminated iron core 1 based on the protruding amounts H, the melting widths W, and the melting depths D obtained in the second welded-portion-measuring step like the first determination step. If the laminated iron core 1 is determined as a quality product, the laminated iron core 1 is conveyed to a subsequent step in the manufacturing line. On the other hand, if the laminated iron core 1 is determined as a defective product, the laminated iron core 1 is separated from the quality products by discharged from a defective product outlet or the like.

In this way, the present embodiment performs the inspection of the protruding amounts H of the welded portions 5 with high accuracy and high speed.

### Embodiment 2

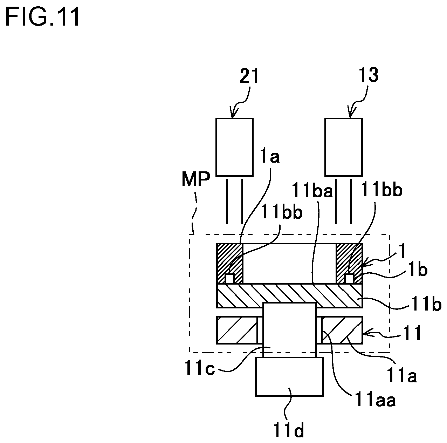

FIG. 10 is a side view illustrating a schematic configuration of a repair device according to the embodiment 2 of the present invention. FIG. 11 is a side view illustrating a rotating part, a measuring part, and a laser irradiator of FIG. 10 with a partial cross-section when measuring and repairing welded portions. In addition, in the embodiment 2, the basic structure is in common with the embodiment 1 and therefore corresponding components to the embodiment 1 are represented with the same reference numerals to eliminate duplicate explanation.

The repair device 19 of the embodiment 2 irradiates, from the axial direction, the protruding portion 5a of the welded portion 5 with a laser if the protruding amount H of the welded portion 5 exceeds the standard, to make the protruding amount H within the standard. For this, the repair device 19 is provided with a laser irradiator 21 in addition to the inspection device 7 of the embodiment 1.

The laser irradiator 21 includes a laser oscillator for a CO2 laser, a YAG laser or the like. The laser irradiator 21 of the present embodiment is arranged to face the end face 1a of the laminated iron core 1 from an upside in the up-and-down direction (axial direction), the laminated iron core being in the measuring position MP.

With this, the laser irradiator 21 performs the laser irradiating in parallel with the measuring of the protruding amounts H using the three-dimensionally measuring part 13 on a same end face 1a as the end face on which the welded portions 5 of the laminated iron core 1 are being measured.

The welded portions 5 that are being measured do not mean only the welded portion 5 that is being actually measured and includes the welded portions 5 that are targets of the measuring and are not measured yet. The parallel includes not only that the measuring of the protruding amounts H and the laser irradiating are performed at the same time but also that the measuring of the protruding amounts H and the laser irradiating are performed with time lag. It should be noted that the laser irradiator 21 may be provided outside the measuring position MP to separately perform the laser irradiating to the laminated iron core 1 to which the measuring of the protruding amounts H is completed.

In the present embodiment, the laser irradiator 21 is arranged at 180 degrees in the circumferential direction with respect to the three-dimensionally measuring part 13. The arrangement of the laser irradiator 21 and the three-dimensionally measuring part 13 is not limited thereto, and it may be appropriate one according to size and the like of the laser irradiator 21 and the three-dimensionally measuring part 13.

Others are the same as of the embodiment 1.

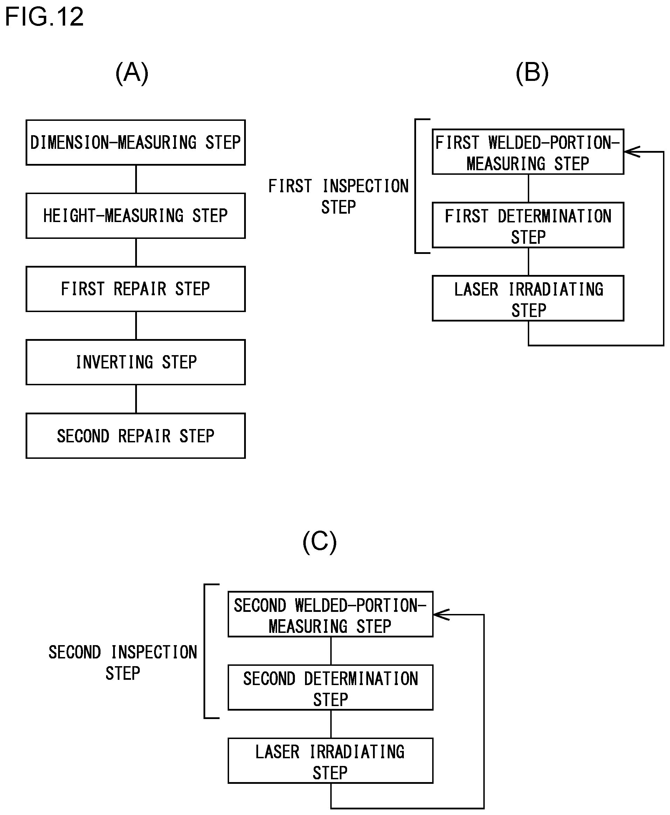

FIGs. 12(A)-(C) are process charts illustrating the repair method of the laminated iron core in which FIG. 12(A) indicates general process, FIG. 12(B) indicates a detail of a first repair step of FIG. 12(A), and FIG. 12(C) indicates a detail of a second repair step of FIG. 12(A).

The repair method for the laminated iron core 1 of the present embodiment performs a laser-irradiating step according to determination results of the first determination step and the second determination step.

The present embodiment allows the protruding amounts H of the welded portions 5 on both end faces 1a of the laminated iron core 1 to be repaired by the a first repair step having the first welded-portion-measuring step, the first determination step, and the laser-irradiating step and a second repair step having the second-welded-portion-measuring step, the second determination step, and the laser-irradiating step.

Namely, as illustrated in FIGs. 12(B) and 12(C), it measures the protruding amounts H of the welded portions 5 relative to the end faces 1a of the laminated iron core 1 in the first and the second welded-portion-measuring steps, to determine whether the protruding amounts H, the melting widths W, and the melting depths D of the welded portions 5 are within the standards or not in the first and the second determination steps. The laser irradiator 21 performs the laser irradiating to the welded portion 5 exceeding the standard in the protruding amount H in the laser-irradiating step.

With this, the protruding amount H of the welded portion 5 is eliminated or reduced to make the protruding amount H within the standard. It should be noted that, if the melting width W or the melding depth D of the welded portion 5 does not meet the standard, the laminated iron core 1 is determined as a defective product and is separated from the quality products by being discharged from the defective product outlet or the like.

In particular, while measuring the welded portions 5 of the laminated iron core 1 being in the measuring position MP by means of the three-dimensionally measuring part 13, the determinations of the measured welded portions 5 are sequentially performed in each of the first and the second repair steps. Then, the laser irradiating is performed to the welded portion 5 of which the protruding amount H exceeds the standard on the same end face 1a as the end face on which the welded portions 5 are sequentially being measured in parallel with the measuring of the protruding amounts H of the other welded portions 5.

Accordingly, it uses measuring time of the three-dimensionally measuring part 13 to perform the laser irradiating, to provide tact-up. Additionally, the condition in which the measuring is performed is kept for the welded portion 5 as it is to perform the laser irradiating, to stabilize repairing accuracy according to the laser irradiating.

The repaired welded portion 5 is measured for the protruding amount H again. Unless the protruding amount H is within the standard, the laser irradiating is performed to repeat the repairing.

### Embodiment 3

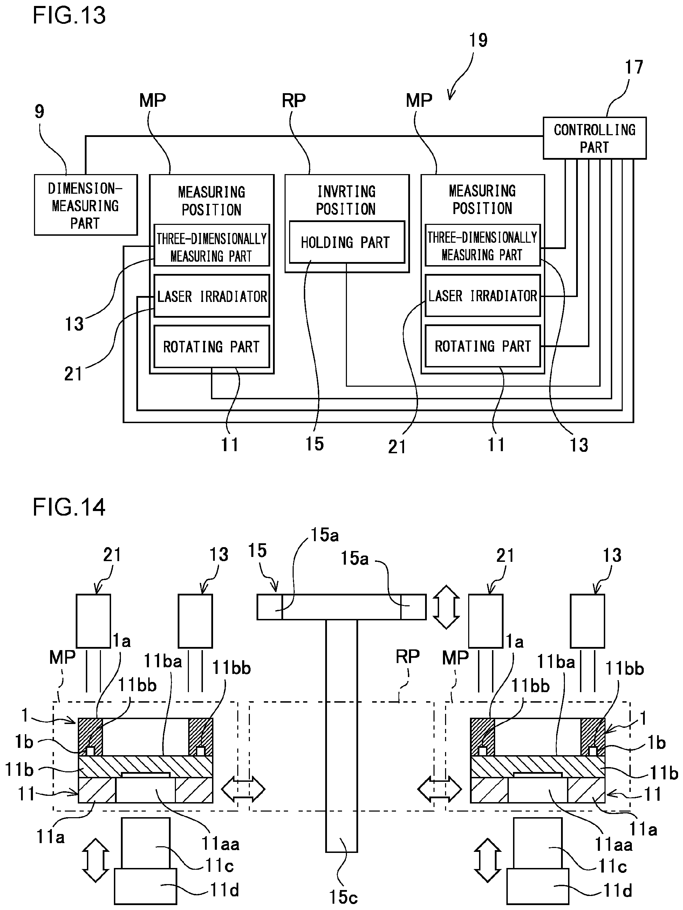

FIG. 13 is a block diagram illustrating a repair device according to the embodiment 3 of the present invention. FIG. 14 is a side view illustrating a schematic configuration of the repair device of FIG. 13 with a partial cross-section. In addition, in the embodiment 3, the basic structure is in common with the embodiment 2 and therefore corresponding components to the embodiment 2 are represented with the same reference numerals to eliminate duplicate explanation.

A repair device 19 of the embodiment 3 provides an inverting position PR between two measuring positions MP and conveys the laminated iron core 1 in one direction to pass through these measuring positions MP and inverting position RP. According to the present embodiment, each of bases 11a of rotating parts 11 reciprocates between the measuring position MP and the inverting position RP.

The rotating parts 11 on both measuring positions MP, however, may share the base 11a and the base 11a may move from the measuring position MP on an upstream side in a conveying direction through the inverting position RP to the measuring position MP on a downstream side. Further, the base 11a may be formed into a plate shape to load the laminated iron core 1 on an outer periphery thereof to convey the laminated iron core 1 in the circumferential direction according rotation of the base 11a. Further, a second inverting position RP may be provided on a still downstream of the measuring position MP on the downstream side.

Each measuring position MP is provided with the rotating part 11, the three-dimensionally measuring part 13, and the laser irradiator 21, and the inverting position RP is provided with the holding part 15 like the embodiment 2.

The present embodiment, therefore, the first welded-portion-measuring step is performed similarly to the embodiment 2 in a state that the base 11a of the rotating part 11 is positioned at the measuring position MP on the upstream side in the conveying direction. Namely, the protruding amounts H, the melting widths W, and the melting depths D of the welded portions 5 are measured relative to one end face 1a of the laminated iron core 1 on the rotary plate 11b of the rotating part 11.

If the protruding amount H exceeds the standard, the laser-irradiating step is performed to conduct repairing with the laser irradiating. If the melting width W or the melting depth D exceeds the standard, the laminated iron core 1 is separated from the quality products by discharged from the defective product outlet or the like.

After the measuring is performed to all the welded portions 5 and the laser repairing is conducted as needed, the laminated iron core 1 is conveyed to the inverting position RP.

Namely, the base 11a of the upstream rotating part 11 is moved to the inverting position RP, and the laminated iron core 1 is held by the holding part 15 and the inverting operation is performed similarly to the embodiment 1. During the inverting operation, the base 11a of the upstream rotating part 11 is retracted to the measuring position MP and the base 11a of the downstream rotating part 11 is advanced to the inverting position RP to take over the inverted laminated iron core 1.

Thereafter, the laminated iron core 1 is conveyed to the measuring position MP on the downstream side in the conveying direction. At this measuring position MP, the second welded-position-measuring step is performed to measure the protruding amounts H, the melting widths W, and the melting depths D of the welded portions 5 relative to the other end face 1a of the laminated iron core 1.

If the protruding amount H exceeds the standard, the laser-irradiating step is performed to conduct repairing with the laser irradiating. If the melting width W or the melting depth D exceeds the standard, the laminated iron core 1 is separated from the quality products by discharged from the defective product outlet or the like.

The embodiment 3 provides the same effects as the embodiments 1 and 2 and additionally performs the first welded-portion-measuring step, the inverting step, and the second welded-portion-measuring step to different respective laminated iron cores 1 in parallel to provide tact-up.

### DESCRIPTION OF NUMERALS

- 1: Laminated iron core
- 1a: End face
- 3: Iron core piece
- 3a: Protruding portion
- 5: Welded portion
- 7: Inspection device
- 9: Dimension-measuring part
- 11: Rotating part
- 13: Three-dimensionally measuring part (Measuring part, Measuring source)
- 15: Holding part
- 19: Repair device
- 21: Laser irradiator

## Claims

1. An inspection method for a laminated iron core in which a plurality of annular iron core pieces are laminated in an axial direction and a plurality of welded portions are provided in a circumferential direction, the welded portions reaching an end face configured by an iron core piece at an end in the axial direction, comprising:
rotating the laminated iron core in the circumferential direction; and
serially measuring, from the axial direction, protruding amounts of the plurality of the welded portions with respect to the end face in the axial direction according to the rotating of the laminated iron core.

2. The inspection method for the laminated iron core according to claim 1, wherein
dimensions of the welded portion in the circumferential direction and a diametral direction of the laminated iron core are three-dimensionally measured together with the protruding amount.

3. The inspection method for the laminated iron core according to claim 1, wherein
measuring of the protruding amounts is performed relative to one end face of the laminated iron core in the axial direction, and thereafter the laminated iron core is inverted and measuring of the protruding amounts is performed relative to the other end face in the axial direction.

4. The inspection method for the laminated iron core according to claim 1, further comprising:
measuring a dimension of the laminated iron core in the axial direction before measuring the protruding amounts; and
relatively adjusting a position of the laminated iron core in the axial direction according to the measured dimension so that an interspace between a measuring source to perform the measuring and the end face is constant in the axial direction.

5. A repair method for a laminated iron core using the inspection method for the laminated iron core according to any one of claims 1-4, comprising:
Irradiating, from the axial direction, a protruding portion of the welded portion protruding from the end face in the axial direction with a laser if the protruding amount exceeds a standard, to make the protruding amount within the standard.

6. The repair method for the laminated iron core according to claim 5, wherein
the irradiating of the laser is performed in parallel with the measuring of the protruding amounts on a same end face as the end face on which the welded portions of the laminated iron core are being measured.

7. An inspection device for a laminated iron core in which a plurality of annular iron core pieces are laminated in an axial direction and a plurality of welded portions are provided in a circumferential direction, the welded portions reaching an end face configured by an iron core piece at an end in the axial direction, comprising:
a rotating part configured to support and rotate the laminated iron core in the circumferential direction; and
a measuring part arranged to face the end face of the rotating laminated iron core in the axial direction and configured to serially measure, from the axial direction, protruding amounts of the plurality of the welded portions with respect to the facing end face in the axial direction according to the rotating of the laminated iron core.

8. The inspection device for the laminated iron core according to claim 7, wherein
the measuring part three-dimensionally measures dimensions of the welded portion in the circumferential direction and a diametral direction of the laminated iron core together with the protruding amount.

9. The inspection device for the laminated iron core according to claim 7, further comprising:
a holding part configured to hold and invert the laminated iron core, wherein
measuring of the protruding amounts is performed by the measuring part relative to one end face in the axial direction, and thereafter the laminated iron core is inverted by the holding part and measuring of the protruding amounts is performed by the measuring part relative to the other end face in the axial direction.

10. The inspection device for a laminated iron core according to claim 7, further comprising:
a dimensionally measuring part configured to measure a dimension of the laminated iron core in the axial direction, wherein
the rotating part or the measuring part is moved in the axial direction to relatively adjust a position of the laminated iron core in the axial direction according to the measured dimension so that an interspace between the measuring part and the end face is constant in the axial direction.

11. A repair device for a laminated iron core using the inspection device for the laminated iron core according to any one of claims 7-10, comprising:
a laser irradiator that irradiates, from the axial direction, a protruding portion of the welded portion protruding from the end face in the axial direction with a laser if the protruding amount exceeds a standard, to make the protruding amount within the standard.

12. The repair device for the laminated iron core according to claim 11, wherein
the laser irradiator is arranged to face the end face of the laminated iron core in the axial direction to perform the irradiating of the laser in parallel with the measuring of the protruding amounts on a same end face as the end face on which the welded portions of the laminated iron core are being measured.
